# EUROPEAN PATENT APPLICATION

(11) **EP 4 675 728 A1**
(43) Date of publication of application: **07.01.2026**
(21) Application number: 24840108.5
(22) Date of filing: 11.07.2024
(51) Int. Cl.: H01M 10/04, H01M 50/183, H01M 50/105, B29C 65/00, B29C 65/14

(54) **SECONDARY BATTERY AND MANUFACTURING METHOD THEREFOR**

(30) Priority: 11.07.2023 KR 20230089996; 10.07.2024 KR 20240091253
(71) Applicant: LG Energy Solution, Ltd., Seoul 07335 (KR)
(72) Inventor: PARK, Sung Chul, Daejeon 34122 (KR); KANG, Tae Won, Daejeon 34122 (KR)
(74) Representative: Goddar, Heinz J.
(86) International application number: PCT/KR2024/009938
(87) International publication number: WO 2025/014298

(57) **Abstract**

A secondary battery of the present invention includes an accommodation part configured to accommodate an electrode assembly by coupling upper and lower pouches, each of which has a structure in which a protective layer, a metal layer, and an insulating layer are sequentially disposed from the inside to the outside, to each other and a case provided with a sealing part configured to seal the accommodation part, wherein the sealing part includes: a sealing area defined by coupling the protective layer of the upper pouch to the protective layer of the lower pouch; an adhesion area defined by withdrawing a portion of the protective layer of each of the upper and lower pouches disposed on the sealing area toward the accommodation part; and an irregular area disposed between the adhesion area and the accommodation part and having an irregular layer provided by allowing a portion of the protective layer of the upper pouch or the protective layer of the lower pouch to ascend, wherein a surface of the irregular layer has a horizontal plane.

## Description

### TECHNICAL FIELD

The present application claims the benefit of the priority of Korean Patent Application Nos. 10-2023-0089996, filed on July 11, 2023, and 10-2024-0091253, filed on July 10, 2024, which are hereby incorporated by reference in their entirety.

### TECHNICAL FIELD

The present invention relates to a secondary battery, which is capable of preventing insulation breakdown in a sealing part of a pouch, and a method for manufacturing the secondary battery.

### BACKGROUND ART

In general, secondary batteries refer to chargeable and dischargeable batteries, unlike primary batteries that are impossible to be charged. The secondary batteries are being widely used in advanced electronic devices such as phones, laptop computers, and camcorders.

In addition, the secondary batteries may be classified in various manners depending on a structure of an electrode assembly. For example, secondary batteries may be classified into a stacked type structure, a wound type (jelly roll-type) structure, and a stacking/folding type structure.

The above-described secondary battery includes an electrode assembly, an electrolyte, and a case that accommodates the electrode assembly and the electrolyte. The electrode assembly includes one or more radical units, and each of the radical units has a structure in which a positive electrode and a negative electrode are alternately arranged with a separator therebetween. The case includes an accommodation part that accommodates the electrode assembly and a sealing part that seals the accommodation part.

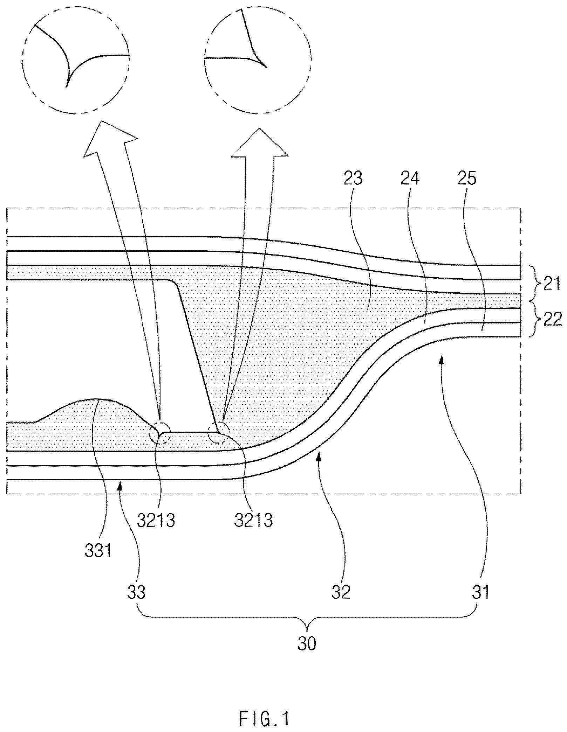

As illustrated in FIG. 1, the case is formed by coupling an upper pouch 21 to a lower pouch 22, and the upper and lower pouches 21 and 22 have a film structure in which a protective layer 23, a metal layer 24, and an insulating layer 25 are disposed from the inside to the outside.

A method for manufacturing a secondary battery having such a structure includes a process of preparing an electrode assembly, a process of accommodating the electrode assembly in an accommodation part of a case, a process of sealing an edge of the case to form a sealing part, and a process of folding the sealing part of the case through heat and a pressure.

Here, the process of folding the sealing part of the pouch refers to folding the sealing part 30 of the case to overlap in one or two stages.

In the process of forming the sealing part, the sealing part is formed with a sealing area that seals the accommodation part, an adhesion area 32 formed when a portion of a protective layer provided on the sealing area is withdrawn toward the accommodation part, and an irregular area 33 formed when a portion of the protective layer protrudes to an irregular layer 331.

However, as illustrated in FIG. 1, the method for manufacturing the secondary battery has a problem in that cracks occur in a boundary line 3213 in which the irregular layer 331 of the irregular area 33 and the protrusion layer of the adhesion area 32 are formed when folding the sealing part 30, and as a result, the metal layer 24 is exposed to the outside to cause a problem in that insulation breakdown occurs. In particular, there is a problem of folding defects of the sealing part due to the irregular layer formed on the irregular area.

### DISCLOSURE OF THE INVENTION

### TECHNICAL PROBLEM

An object of the present invention is to provide a secondary battery, in which an adhesion area and an irregular area, which are formed on a sealing part of a pouch, are heated and pressed to prevent cracks and insulation breakdown of the adhesion area and the irregular area from occurring, particularly, an irregular layer of the irregular area is adjusted to increase in folding force of the sealing part, and a method for manufacturing the secondary battery.

### TECHNICAL SOLUTION

A secondary battery of the present invention may include an accommodation part configured to accommodate an electrode assembly by coupling upper and lower pouches, each of which has a structure in which a protective layer, a metal layer, and an insulating layer are sequentially disposed from the inside to the outside, to each other and a case provided with a sealing part configured to seal the accommodation part, wherein the sealing part may include: a sealing area defined by coupling the protective layer of the upper pouch to the protective layer of the lower pouch; an adhesion area defined by withdrawing a portion of the protective layer of each of the upper and lower pouches disposed on the sealing area toward the accommodation part; and an irregular area disposed between the adhesion area and the accommodation part and having an irregular layer provided by allowing a portion of the protective layer of the upper pouch or the protective layer of the lower pouch to ascend, wherein a surface of the irregular layer may have a horizontal plane.

The horizontal plane may be parallel to the protective layer of the upper pouch or the lower pouch.

The irregular layer may ascend by 0.01 mm to 2.0 mm based on the protective layer of the upper pouch or the protective layer of the lower pouch.

A boundary between the adhesion area and the irregular area may be provided as a curved surface.

The irregular layer may be provided in plurality on the irregular area, and the plurality of irregular layers may have the same height as a whole.

A method for manufacturing a secondary battery of the present invention may include: a process (a) of manufacturing a case including upper and lower pouches each of which has a structure in which a protective layer, a metal layer, and an insulating layer are sequentially arranged from the inside to the outside and then accommodating an electrode assembly in an accommodation part formed through the upper and lower pouches; a process (b) of sealing an edge of the pouch to form a sealing part, wherein the sealing part may include a sealing area defined by coupling the protective layer of the upper pouch to the protective layer of the lower pouch, an adhesion area defined by withdrawing a portion of the protective layer of each of the upper and lower pouches disposed on the sealing area toward the accommodation part, and an irregular area disposed between the adhesion area and the accommodation part and having an irregular layer provided by allowing a portion of the protective layer of the upper pouch or the protective layer of the lower pouch to ascend; and a process (c) of heating the adhesion area and the irregular area to a set temperature and for a set time to soften the adhesion area and the irregular area and then compressing the upper and lower pouches disposed on the irregular area to adjust the irregular layer, wherein, in the process (c), a surface of the irregular layer may be adjusted to have a horizontal plane.

The method may further include, after the process (c), a process (d) of folding the sealing part to correspond to a side surface of the accommodation part and then compressing the sealing part toward the accommodation part.

In the process (c), the surface of the irregular layer may be adjusted to be parallel to the protective layer of the upper pouch or the lower pouch.

In the process (c), the irregular layer may be adjusted to have a set height based on the protective layer of the upper pouch or the protective layer of the lower pouch, wherein the set height may range of 0.01 mm to 2.0 mm.

In the process (c), the set temperature may range of 100°C to 160°C, and the set time may range of 0.3 seconds to 1.0 second.

In the process (c), the adhesion area and the upper pouch and the lower pouch of the irregular area may be heated at temperatures different from each other.

The upper pouch may be heated to a temperature of 100°C to 140°C, and the lower pouch disposed below the upper pouch is heated to a temperature of 100°C to 160°C, wherein the lower pouch may be heated to a temperature greater than that of the upper pouch.

After the process (c), the plurality of irregular layers formed on the irregular area may have the same height as a whole.

The process (c) may further include a process of inspecting whether a height of the irregular layer has a preset height value.

The process (b) may further include a process of folding the sealing area to overlap.

### ADVANTAGEOUS EFFECTS

In the secondary battery of the present invention, the irregular layer of the irregular area formed on the sealing part may have the horizontal plane to more stably fold the sealing part and prevent the cracks and the insulation breakdown from occurring between the adhesion area and the irregular area of the sealing part.

### BRIEF DESCRIPTION OF THE DRAWINGS

FIG. 1 is a cross-sectional view of a sealing part according to a related art.
FIG. 2 is a perspective view of a secondary battery according to an embodiment of the present invention.
FIG. 3 is a cross-sectional view of FIG. 1.
FIG. 4 is a partial enlarged view of a portion A FIG. 3.
FIG. 5 is a side view illustrating a folded state of the sealing part illustrated in FIG. 2.
FIG. 6 is a flowchart illustrating a method for manufacturing a secondary battery according to an embodiment of the present invention.
FIG. 7 is a process view illustrating a process (a) of manufacturing a pouch and accommodating an electrode assembly.
FIG. 8 is a process view illustrating a process (b) of forming a sealing part of the pouch.
FIG. 9 is an enlarged view of a portion B of FIG. 8.
FIG. 10 is a process view illustrating a process of folding the sealing part in the process (b) of forming the sealing part of the pouch.
FIG. 11 is a process view illustrating a process (c) of heating an adhesive area and an irregular area of the sealing part.
FIG. 12 is an enlarged view of a portion C illustrated in FIG. 10.
FIG. 13 is a cross-sectional view illustrating the sealing part that is in a state in which the process (c) of heating the adhesion area and the irregular area of the sealing part is completed.
FIG. 14 is a process view illustrating a process (d) of folding the sealing part.
FIG. 15 is a cross-sectional view illustrating a plurality of irregular layers formed on the irregular area of the sealing part.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to embodiment of the present invention]

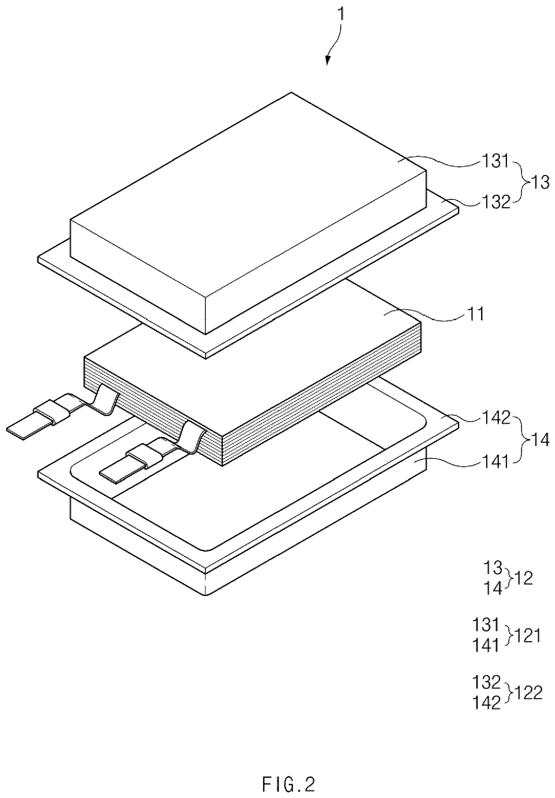

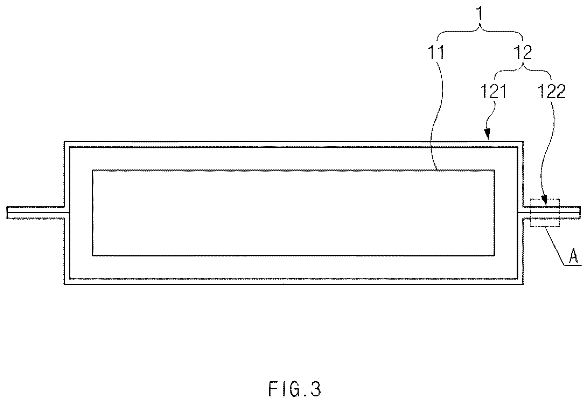

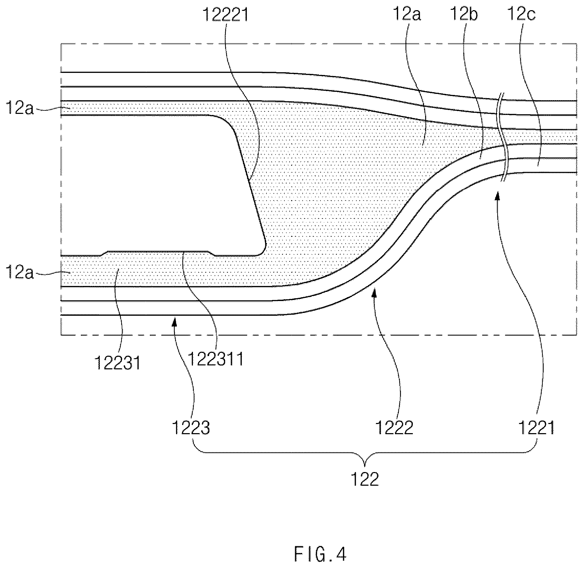

FIG. 2 is a perspective view of a secondary battery according to an embodiment of the present invention, FIG. 3 is a cross-sectional view of FIG. 1, and FIG. 4 is a partial enlarged view of a portion A FIG. 3.

As illustrated in FIGS. 2 to 4, a secondary battery 1 according to an embodiment of the present invention includes an electrode assembly 11 and a case 12 that accommodates the electrode assembly 11.

### Electrode assembly

The electrode assembly 11 has a structure in which electrodes and separators are alternately arranged and includes a positive electrode and a negative electrode. That is, the electrode assembly has a structure in which the positive electrodes and the negative electrodes are alternately disposed with the separator therebetween.

### Case

The case 12 includes an accommodation part 121 in which the electrode assembly is accommodated, and a sealing part 122 disposed along an edge of the accommodation part 121 to seal the accommodation part 121.

Referring to FIG. 2, the case 12 is manufactured by assembling an upper pouch 13 and a lower pouch 14. That is, the upper pouch 13 includes an upper accommodation groove 131 and an upper edge 132, and the lower pouch 14 includes a lower accommodation groove 141 and a lower edge 142.

In the case 12 having such a structure, when the upper pouch 13 and the lower pouch 14 are disposed to correspond to each other, the upper accommodation groove 131 and the lower accommodation groove 141 are connected to provide an accommodation part 121, and the upper edge 132 and the lower edge 142 are sealed to provide a sealing part 122. However, this embodiment is not limited thereto, and the accommodation groove may be defined in only one of the upper pouch 13 and the lower pouch 14.

Here, each of the upper pouch and the lower pouch is provided as a pouch film in which a protective layer 12a, a metal layer 12b, and an insulating layer 12c are sequentially disposed from the inside to the outside of the case 12.

That is, the protective layer 12a is disposed on an inner surface of the case 12, the insulating layer 12c is disposed on an outer surface of the case 12, and the metal layer 12b is disposed at a center of the case 12.

The protective layer 12a is made of polypropylene. The metal layer 12b is made of aluminum. The insulating layer 12c is made of an epoxy resin, a fluorine resin, and a polyimide resin.

Referring to FIG. 4, the sealing part 122 of the case 12 includes a sealing area 1221, an adhesion area 1222, and an irregular area 1223.

The sealing area 1221 is provided by compressing an edge of the accommodation part 121 with heat and a pressure. The adhesion area 1222 may be provided when a portion of the protective layer of each of the upper and lower pouches disposed on the sealing area is withdrawn toward the accommodation part 121. The irregular area 1223 is disposed between the adhesion area 1222 and the accommodation part 121 and has an irregular layer 12231 provided when a portion of the protective layer of the upper pouch or the protective layer of the lower pouch ascends, or a portion of the protective layer of the adhesion area is introduced.

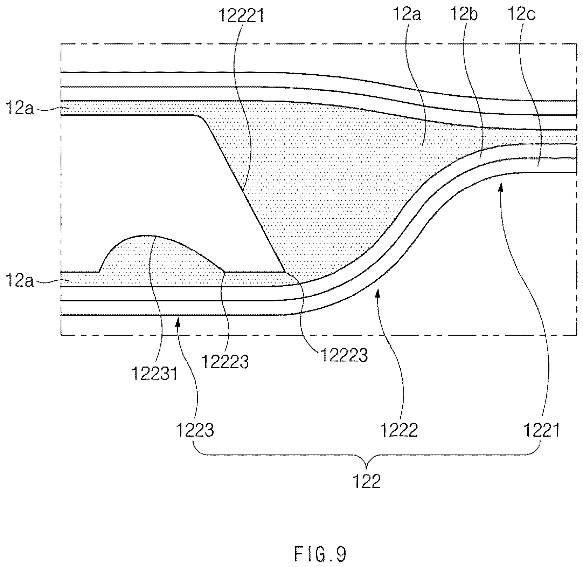

Here, a boundary line 12223, which is a folded portion, is provided between the irregular layer and the protective layer or between the adhesion area and the irregular area (see FIG. 9).

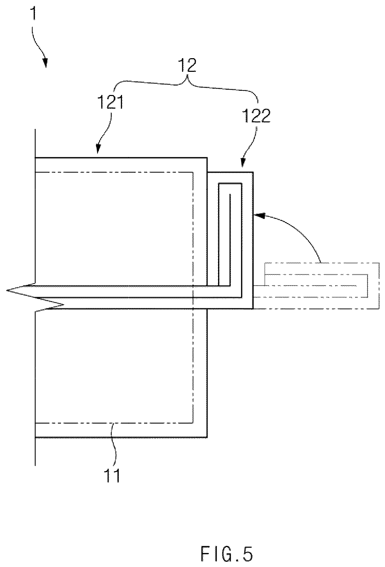

FIG. 5 is a side view illustrating a folded state of the sealing part illustrated in FIG. 2.

The sealing part 122 is folded to overlap so as to minimize a length of the sealing part as illustrated in FIG. 5. For example, the sealing part 122 may be primarily folded so that a length in a left and right direction is halved when viewed in FIG. 5 and then secondarily folded vertically to correspond to a side portion of the accommodation part 121. In summary, the sealing part 122 may be folded toward the accommodation part 121 and disposed on a side surface of the accommodation part 121 or be in close contact with and be bonded.

Here, in the secondary battery 1 according to an embodiment of the present invention, a surface of the irregular layer 12231 disposed on the irregular area 1223 (top surface of the irregular layer when viewed in FIG. 4) is provided as a flat horizontal plane 122311. That is, in the secondary battery 1 according to an embodiment of the present invention, the irregular layer 12231 disposed on the irregular area 1223 may be pressed to be flat by compressing the irregular area 1223 with heat and a pressure, and thus, the surface of the irregular layer 12231 may be formed into the horizontal plane 122311. This may reduce a thickness of the sealing part when folding the sealing part, on which the irregular layer is provided, to increase in folding force of the sealing part.

In particular, the secondary battery 1 according to an embodiment of the present invention may soften the irregular layer 12231 and the boundary line 12223 between the adhesion area 1222 and the irregular area 1223 when the heat is applied in a contact or non-contact manner, to prevent cracks from occurring in the boundary line 12223 when the sealing part 122 is folded. In particular, when compressing the irregular area 1223, a portion of the irregular layer 12231 may be introduced toward the boundary line 12223, and thus, as the boundary line 12223 is deformed into a roughly curved shape, the occurrence of the insulation breakdown may be significantly prevented.

That is, the cracks and the insulation breakdown occur in the boundary line 12223, and the sealing part 12223 on which the irregular layer 12231 is provided may be heated and compressed to remove the boundary line 12223, and as a result, the cracks and the insulation breakdown may be prevented from occurring.

In summary, the secondary battery according to the present invention has a structure in which the irregular layer 12231 is reduced, and there is no folded boundary line 12223 between the adhesion area 1222 and the irregular area 1223. In particular, the surface of the irregular layer 12231 has the horizontal plane. Thus, the cracking and the insulation breakdown may be prevented when the sealing part 122 is folded.

In particular, in the present invention, the irregular area 1223 on which the irregular layer 12231 is provided may have a preset height, and the preset height may be 1.2 times to 2.0 times a thickness of the sealing area 1221. The irregular area 1223 may have an ascending height of 0.01 mm to 2.0 mm based on the protective layer of the upper pouch or the protective layer of the lower pouch.

The irregular layer 12231 may be provided in plurality on the irregular area, and the plurality of irregular layers have the same height and horizontal plane as a whole.

Thus, the secondary battery 1 according to an embodiment of the present invention may prevent the cracks from occurring in the adhesion area 1222 and the irregular area 1223 even when the sealing part 122 of the case 12 is folded, and as a result, the insulation breakdown may be prevented from occurring.

Hereinafter, a method for manufacturing a secondary battery according to an embodiment of the present invention will be described.

### [Method for manufacturing secondary battery according to embodiment of the present invention]

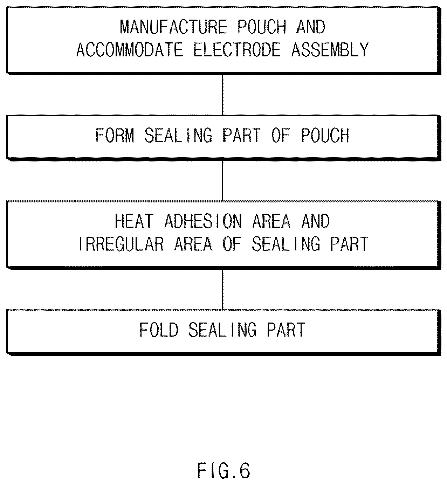

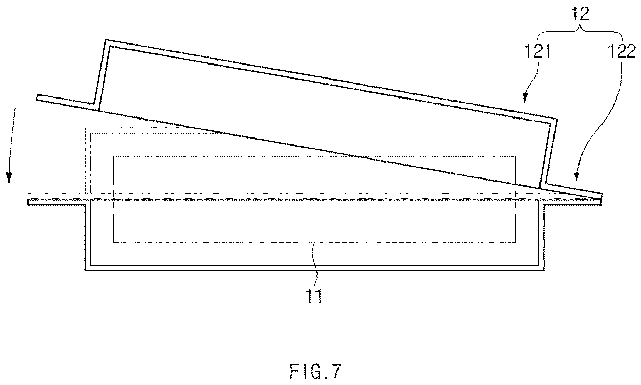

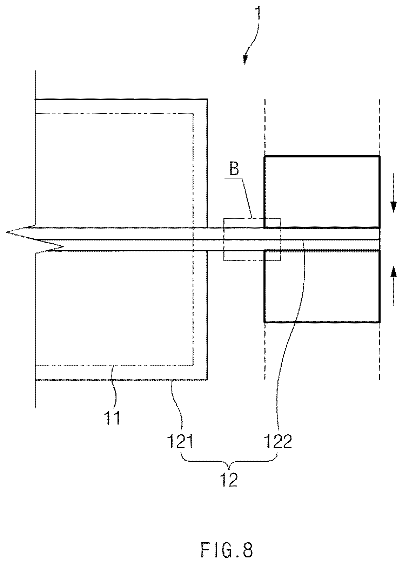

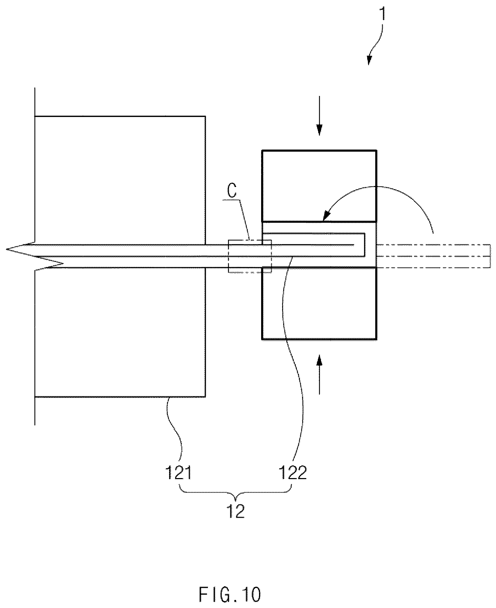

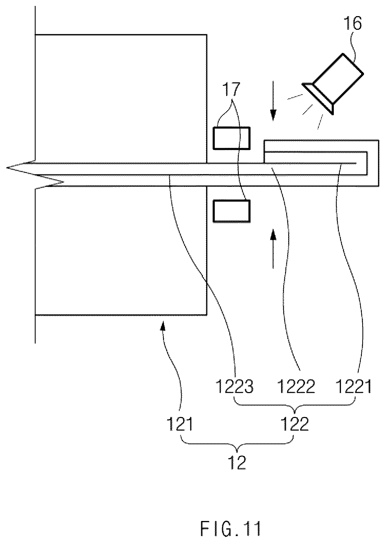

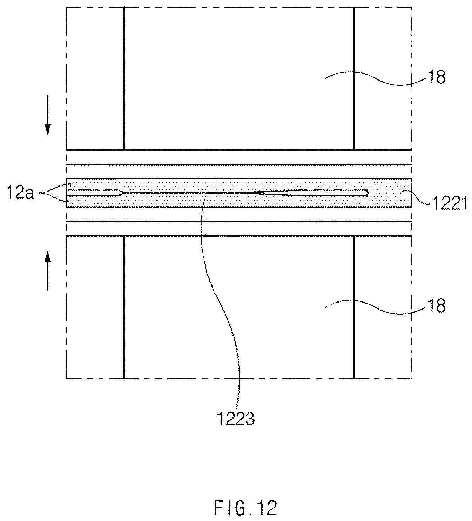

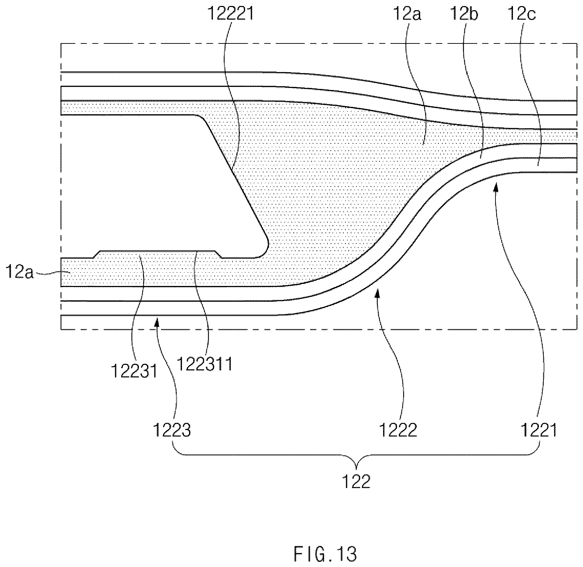

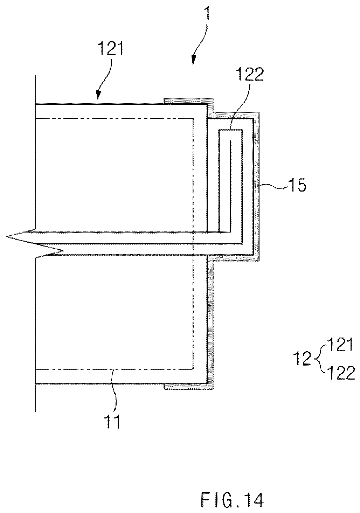

FIG. 6 is a flowchart illustrating a method for manufacturing a secondary battery according to an embodiment of the present invention, FIG. 7 is a process view illustrating a process (a) of manufacturing a pouch and accommodating an electrode assembly, FIG. 8 is a process view illustrating a process (b) of forming a sealing part of the pouch, FIG. 9 is an enlarged view of a portion B of FIG. 8, FIG. 10 is a process view illustrating a process of folding the sealing part in the process (b) of forming the sealing part of the pouch, FIG. 11 is a process view illustrating a process (c) of heating an adhesive area and an irregular area of the sealing part, FIG. 12 is an enlarged view of a portion C illustrated in FIG. 10, FIG. 13 is a cross-sectional view illustrating the sealing part that is in a state in which the process (c) of heating the adhesion area and the irregular area of the sealing part is completed, and FIG. 14 is a process view illustrating a process (d) of folding the sealing part.

As illustrated in FIG. 6, a method for manufacturing a secondary battery according to an embodiment of the present invention includes a process (a) of manufacturing a pouch and accommodating an electrode assembly, a process (b) of forming a sealing part of the pouch, a process (c) of heating an adhesion area and an irregular area of the sealing part, and a process (d) of folding the sealing part.

### (a) Process of manufacturing pouch and accommodating electrode assembly

As illustrated in FIG. 7, in the process (a) of manufacturing the pouch and accommodating the electrode assembly, a case 12 including an upper pouch 13 and a lower pouch 14 is manufactured. Referring to FIG. 3, the case 12 manufactured in this manner includes an accommodation part 121 that accommodates the electrode assembly 11 and a sealing part 122 that seals the accommodation part 121.

That is, in the method for manufacturing the pouch, upper and lower pouch films in which a protective layer 12a, a metal layer 12b, and an insulating layer 12c are alternately stacked are prepared. Next, accommodation grooves corresponding to the upper pouch film and the lower pouch film are molded to manufacture an upper pouch 13 and a lower pouch 14, respectively. Next, the upper and lower pouches are disposed vertically to manufacture a case. Here, the upper accommodation groove of the upper pouch 13 and the lower accommodation groove of the lower pouch 14 are connected to form an accommodation part 121, and an upper edge of the upper pouch 13 and a lower edge of the lower pouch 14 are connected to form a sealing part 122.

When the case 12 is manufactured in this manner, the electrode assembly 11 is accommodated in the accommodation part 121 of the case 12.

Referring to FIG. 4, the protective layer 12a, the metal layer 12b, and the insulating layer 12c are arranged sequentially from the inside to the outside of the case 12. That is, the protective layer 12a is disposed on the inner surface of the case 12, the insulating layer 12c is disposed on the outer side of the case 12, and the metal layer 12b is disposed at the center of the case 12.

### (b) process of forming sealing part of pouch

As illustrated in FIG. 8, in the process (b) of forming the sealing part of the pouch, an edge of the case 12 is compressed with the heat and the pressure to form the sealing part 122. Here, the sealing part 122 includes a sealing area 1221 that is compressed with the heat and the pressure to seal the accommodation part 121, an adhesion area 1222 formed when a portion of the protective layer 12a disposed on the sealing area 1221 is withdrawn and protrudes toward the accommodation part, and an irregular area 1223 that is disposed between the adhesion area 1222 and the accommodation part 121 and has an irregular layer 12231 formed when a portion of the protective layer of the upper pouch or the protective layer of the lower pouch ascends, or the protective layer of the adhesion area is introduced.

Here, as illustrated in FIG. 9, the adhesion area 1222 refers to an area formed when the protective layer 12a of the sealing area 1221 is introduced. Here, the protective layer introduced into the adhesion area 1222 protrudes irregularly to form a protrusion layer 12221.

In addition, the irregular area 1223 is formed when a portion of the protective layer of the upper pouch or the protective layer of the lower pouch ascends, or when the protective layer of the adhesion area is introduced.

Here, the irregular layer 12231 may have a convex shape or an irregularly protruding shape. However, as a thickness of the sealing part 122 increases due to the irregular layer 12231, folding failure may occur when folding the sealing part 122. In particular, a portion having a roughly folded shape may occur at the boundary line 12223 between the irregular area 1223 and the adhesion area 1222, and when cracks occurs in the portion, the metal layer may be exposed to the inside of the accommodation part to cause the insulation breakdown.

As illustrated in FIG. 10, the process (b) of forming the sealing part of the pouch further includes a sealing area folding process of folding the sealing area 1221 of the sealing part 122 so that the sealing area 1221 is folded to overlap in half. That is, in the sealing area folding process, the sealing area is folded to overlap in half and then is compressed with the heat and the pressure to be bonded. In the process of forming the sealing part, the sealing area 1221 of the sealing part 122 may be folded.

The sealing area 1221 may be folded after the process of heating the adhesion area and irregular area without being folded in the process of forming the sealing part.

The method for manufacturing the secondary battery of the present invention includes the process (c) of heating the adhesion area and the irregular area to prevent the cracking and the insulation breakdown from occurring.

That is, in the process of heating the adhesion area and the irregular area, the adhesion area 1222 and the irregular area 1223 may be heated to soften the irregular layer and the protective layer, which are included in the adhesion area and the irregular area, and as a result, when the sealing part is folded, the cracks and the insulation breakdown may be prevented from occurring in the boundary line between the irregular layer and the protective layer.

In summary, in the process (c) of heating the adhesion area and the irregular area, the irregular layer and the protective layer may be softened to prevent the cracks from occurring between the irregular layer and the protective layer even though the sealing part 122 is folded, thereby preventing the insulation breakdown from occurring.

Hereinafter, the process (c) of heating the adhesion area and the irregular area will be described in more detail with reference to the attached drawings.

### (c) process of heating adhesion area and irregular area

As illustrated in FIGS. 11 to 13, in the process (c) of heating the adhesion area and the irregular area heating, the adhesion area 1222 and the irregular area 1223 are heated at a preset temperature and for a preset time using a heater 17. As a result, the irregular layer and the protective layer, which are included in the adhesion area 1222 and irregular area 1223, may be softened. Thus, even if the adhesion area 1222 and the irregular area 1223 are folded, the cracks may be prevented from occurring because the irregular layer and the protective layer are softened.

The preset temperature here may be 100°C to 160°C. That is, when the adhesion area 1222 and the irregular area 1223 are heated to 100°C or less, the temperature transmitted to the irregular layer is lowered to 100°C or less, and thus, there is a problem in that the irregular layer is not effectively softened. In addition, when the adhesion area 1222 and the irregular area 1223 are heated to 160°C or more, unintended deformation may occur in the irregular layer due to the high temperature.

The preset time may be between 0.3 seconds to 1.0 seconds. That is, when the adhesion area 1222 and the irregular area 1223 are heated for 0.3 seconds or less, there is a problem in that the irregular layer disposed on the irregular area 1223 is not sufficiently heated. In addition, if the adhesion area 1222 and the irregular area 1223 are heated for 1.0 second or more, the irregularities may be sufficiently softened, but there is a problem that unnecessary energy is consumed.

As illustrated in FIG. 12, the process (c) of heating the adhesion area and the irregular area may further include a process of compressing both surfaces of the heated irregular area 1223 using a pressing block 18 to adjust a height (thickness) of the irregular area 1223 with respect to the irregular layer 12231.

That is, as illustrated in FIG. 12, in the process of adjusting the thickness of the irregular area, when both the surfaces of the heated irregular area 1223 are compressed through the pressing block 18, the irregular layer may be pressed while compressing the irregular layer to adjust the height (thickness) of the irregular layer. In other words, the irregular layer may be adjusted to have a set height based on the protective layer of the upper pouch or the protective layer of the lower pouch.

To explain in more detail, when both the surfaces of the heated irregular area 1223 are pressed, the irregular layer is pressed to reduce the thickness thereof, and also, a portion of the irregular layer is introduced into the protective layers of the upper and lower pouches to increase in thickness of each of the protective layers of the upper and lower pouches. This has an effect of increasing in thickness between the irregular layer and the protective layer of each of the upper and lower pouches, thereby preventing the cracks and the insulation breakdown from occurring.

Thus, in the process of adjusting the thickness of the irregular area, the entire thickness of the irregular layer of the irregular area 1223 may be uniformly adjusted, preferably, so that the entire irregular protective layer has the same thickness.

The set height may be 0.01 mm to 2.0 mm. Here, the set height may vary depending on the pressure acting on the irregular area.

A surface of the irregular layer 12231 is adjusted to have a horizontal plane. Since the irregular layer is also compressed when the upper and lower pouches are compressed, the surface of the irregular layer 12231 is changed into the horizontal plane. This may minimize a thickness of the secondary battery when folding the sealing part 122 described later.

In particular, the surface of the irregular layer 12231 is adjusted parallel to the protective layer of the upper pouch or the lower pouch.

Top and bottom surfaces of the adhesion area 1222 and the irregular area 1223 are heated to different temperatures. That is, since the thicknesses of the protective layers on upper and lower portions of the adhesion area 1222 and the irregular area 1223 are different from each other, the top and bottom surfaces of the adhesion area 1222 and the irregular area 1223 are heated to different temperatures. Thus, the protective layers of the entire adhesion area 1222 and irregular area 1223 may be stably softened.

For example, the top surface is heated to 100°C to 140°C, and the bottom surface is heated to 120°C to 160°C. Here, the bottom surface is heated to a temperature greater than that of the top surface. This is because the thick irregular protective layer is formed on the bottom surface of the adhesion area 1222, the bottom surface is heated to a temperature greater than that of the top surface.

The adhesion area 1222 and the irregular area 1223 are heated in a non-contact manner using an infrared lamp among the heaters 17. Thus, the irregular layer may be stably heated without damaging the adhesion area 1222 and the irregular area 1223. Alternatively, the adhesion area 1222 and the irregular area 1223 may also be heated in a contact manner through the heater.

The process (c) of heating the adhesion area may further include a process of inspecting whether the thickness of the irregular layer of the adhesion area 1222 has a preset thickness value after adjusting the thickness of the irregular protective layer of the adhesion area.

That is, in the inspection process, the irregular area 1223 in which the thickness of the irregular layer is adjusted may be fluoroscopic-photographed using an infrared camera to measure a thickness of the irregular layer from a fluoroscopic-photographed image, thereby obtaining a measured value. Next, the measured value is compared with the preset thickness value, and if the measured value is within the preset thickness value, it is determined as normal, and if the measured value is out of the preset thickness value, it is determined as defective.

Here, the preset thickness value may vary depending on a material, a size, and an application product of the pouch.

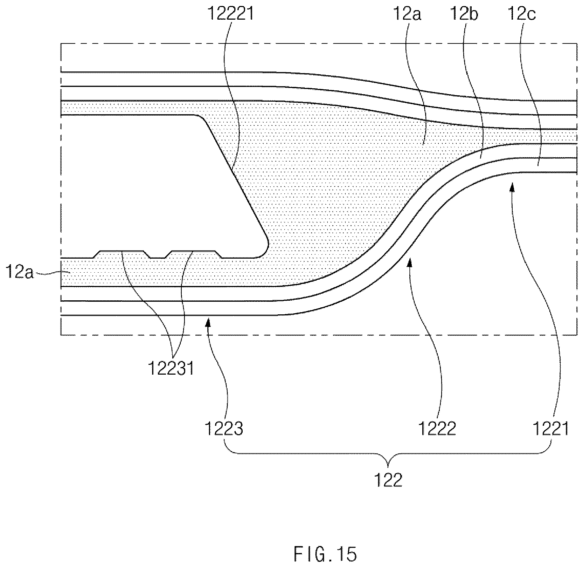

As illustrated in FIG. 15, if a plurality of irregular layers are formed on the irregular area, the plurality of irregular layers formed on the irregular area after the process (c) have the same height as a whole. That is, the plurality of irregular layers have regular heights and horizontal planes to increase in folding force of the sealing part.

### (d) Process of folding sealing part

Referring to FIG. 14, in the process (d) of folding the sealing part, the sealing part 122 in which the irregular layer of the irregular area 1223 is softened is folded to correspond to the side surface of the accommodation part 121, and then, the sealing part 122 is pressed toward the accommodation part 121. The sealing part 122 may be disposed on or adhere to the side portion of the accommodation part 121.

A protective tape 15 may be attached to surround the sealing part 122.

When the above-described processes are completed, a finished secondary battery 1 may be manufactured.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

1: Secondary battery
11: Electrode assembly
12: Case
13: Upper pouch
14: Lower pouch
12a: Protective layer
12b: Metal layer
12c: Insulating layer
121: Accommodation part
122: Sealing part
1221: Sealing area
1222: Adhesion area
12221: Protrusion layer
1223: Irregular area
12231: Irregular layer
122311: Horizontal plane
12223: Boundary line
13: Upper pouch
131: Upper accommodation groove
132: Upper edge
14: Lower pouch
141: Lower accommodation groove
142: Lower edge
15: Protective tape
16: Infrared camera
17: Heater
18: Pressing block

## Claims

1. A secondary battery comprising an accommodation part configured to accommodate an electrode assembly by coupling upper and lower pouches, each of which has a structure in which a protective layer, a metal layer, and an insulating layer are sequentially disposed from the inside to the outside, to each other and a case provided with a sealing part configured to seal the accommodation part,
wherein the sealing part comprises:
a sealing area defined by coupling the protective layer of the upper pouch to the protective layer of the lower pouch;
an adhesion area defined by withdrawing a portion of the protective layer of each of the upper and lower pouches disposed on the sealing area toward the accommodation part; and
an irregular area disposed between the adhesion area and the accommodation part and having an irregular layer provided by allowing a portion of the protective layer of the upper pouch or the protective layer of the lower pouch to ascend,
wherein a surface of the irregular layer has a horizontal plane.

2. The secondary battery of claim 1, wherein the horizontal plane is parallel to the protective layer of the upper pouch or the lower pouch.

3. The secondary battery of claim 1, wherein the irregular layer ascends by 0.01 mm to 2.0 mm based on the protective layer of the upper pouch or the protective layer of the lower pouch.

4. The secondary battery of claim 1, wherein a boundary between the adhesion area and the irregular area is provided as a curved surface.

5. The secondary battery of claim 1, wherein the irregular layer is provided in plurality on the irregular area, and
the plurality of irregular layers have the same height as a whole.

6. A method for manufacturing a secondary battery, the method comprising:
a process (a) of manufacturing a case comprising upper and lower pouches each of which has a structure in which a protective layer, a metal layer, and an insulating layer are sequentially arranged from the inside to the outside and then accommodating an electrode assembly in an accommodation part formed through the upper and lower pouches;
a process (b) of sealing an edge of the pouch to form a sealing part, wherein the sealing part comprises a sealing area defined by coupling the protective layer of the upper pouch to the protective layer of the lower pouch, an adhesion area defined by withdrawing a portion of the protective layer of each of the upper and lower pouches disposed on the sealing area toward the accommodation part, and an irregular area disposed between the adhesion area and the accommodation part and having an irregular layer provided by allowing a portion of the protective layer of the upper pouch or the protective layer of the lower pouch to ascend; and
a process (c) of heating the adhesion area and the irregular area to a set temperature and for a set time to soften the adhesion area and the irregular area and then compressing the upper and lower pouches disposed on the irregular area to adjust the irregular layer,
wherein, in the process (c), a surface of the irregular layer is adjusted to have a horizontal plane.

7. The method of claim 6, further comprising, after the process (c), a process (d) of folding the sealing part to correspond to a side surface of the accommodation part and then compressing the sealing part toward the accommodation part.

8. The method of claim 6, wherein, in the process (c), the surface of the irregular layer is adjusted to be parallel to the protective layer of the upper pouch or the lower pouch.

9. The method of claim 6, wherein, in the process (c), the irregular layer is adjusted to have a set height based on the protective layer of the upper pouch or the protective layer of the lower pouch,
wherein the set height ranges of 0.01 mm to 2.0 mm.

10. The method of claim 6, wherein, in the process (c), the set temperature ranges of 100°C to 160°C, and the set time ranges of 0.3 seconds to 1.0 second.

11. The method of claim 6, wherein, in the process (c), the adhesion area and the upper pouch and the lower pouch of the irregular area are heated at temperatures different from each other.

12. The method of claim 11, wherein the upper pouch is heated to a temperature of 100°C to 140°C, and the lower pouch disposed below the upper pouch is heated to a temperature of 100°C to 160°C,
wherein the lower pouch is heated to a temperature greater than that of the upper pouch.

13. The method of claim 6, wherein, after the process (c), the plurality of irregular layers formed on the irregular area have the same height as a whole.

14. The method of claim 6, wherein the process (c) further comprises a process of inspecting whether a height of the irregular layer has a preset height value.

15. The method of claim 6, wherein the process (b) further comprises a process of folding the sealing area to overlap.
